# EUROPEAN PATENT APPLICATION

(11) **EP 0 566 848 A2**
(43) Date of publication of application: **27.10.1993**
(21) Application number: 93103641.2
(22) Date of filing: 08.03.1993
(51) Int. Cl.: G06F 15/20, G06F 15/38

(54) **System for the automated analysis of compound words**

(30) Priority: 22.04.1992 DE 4213533
(71) Applicant: INTERNATIONAL BUSINESS MACHINES CORPORATION, Armonk, N.Y. 10504 (US)
(72) Inventor: Schoenherr, Lutz, W-6741 Rhodt unter Rietburg (DE)
(74) Representative: Schäfer, Wolfgang, Dipl.-Ing.

(57) **Abstract**

The invention concerns a system for the automated analysis of words composed of several components. Such analyses are required, for example, for text correction or syllabification by means of a computer system. For this purpose, the computer system decomposes the compound word into its components and compares the compound word letter for letter with components stored in its memory. The memory also contains rank orders indicating a component's probability of occurrence in a compound word. If the computer finds a match between a stored component and letters of the compound word, it checks the probability of occurrence of this component within the compound word. By means of this probability information, the computer system decides whether the component is "correct" or "incorrect", i.e. whether the compound word has been correctly or incorrectly decomposed. Further information for verifying the decomposition of a compound word consists of a rank order stored in the memory of the computer system and indicating for each number of letters of a compound word the most probable number of components contained therein. Rank orders of the above-described kind are used by the computer system to decompose a compound into its components quickly and correctly.

## Description

The invention concerns a computer system for the automated analysis of words composed of several components, comprising a memory storing the components of the compound words, as well as a suitable method for the automated analysis of words with the aid of a computer system.

In many natural languages, particular words are composed of several individual components. Thus, for instance, most nouns of the German language consist of several individual components which may be nouns or verbs, adverbs, adjectives, etc. Examples of this are the compound nouns "Steckverbindung" and "Dichterkongreß".

In text processing with the aid of a computer system, it is necessary for the computer system to verify and analyze such words consisting of several compounds, for example, for error correction or syllabification. One approach for such an analytical method is to store each compound word as such in the memory of the computer system and to compare the compound word to be verified with the stored compound words. This method has the disadvantage that a large number of compound words require a substantial amount of memory space, so that methods of this kind can only be implemented on large computer systems.

Another approach for analyzing words composed of several components is to store only the components rather than all compound words as such in the memory of the computer system. This reduces the memory space for storing compound words considerably. At the same time, this approach requires that the computer system be capable of correctly decomposing or segmenting a compound word into its individual components.

This may be done, for instance, by the computer system comparing the compound word to be analyzed from the front or the back letter for letter with components stored in the memory. If, for example, the last four letters of the word to be analyzed are found to match a stored component, the computer system assumes that this stored component is the last component of the compound word. The search then continues for further matching components until the entire compound word has been processed.

Most compound words may be decomposed into their individual components in various ways. This will be demonstrated below with regard to the above-mentioned examples "Steckverbindung" and "Dichterkongreß". Thus, for instance, when processing the noun "Steckverbindung" from back to front, the computer system will identify the noun "Dung" as the first component. Then it will identify the preposition "in", followed by the noun "Verb" and the verb stem "Steck" as components of the compound word. Obviously, however, this analysis of the word "Steckverbindung" by the computer system yields an incorrect result. The correct decomposition of the word "Steckverbindung" would consist of the verb stem "Steck" and the noun "Verbindung". An analysis of the word "Dichterkongreß" by the computer system along the described lines would produce equally false results, as the computer system would successively recognize the components "Kongreß", "er" and "dicht", whereas the word "Dichterkongreß" correctly decomposes into the nouns "Dichter" and "Kongreß".

Thus, the computer system is unable to correctly decompose many compound words, in particular many compound nouns of the German language, into their individual components.

It is the object of the invention to improve the processing of compound words such that errors are avoided.

This object is accomplished according to the invention in that a computer system of the above-described kind stores in its memory a rank order of particular component characteristics, with said rank order depending upon the frequency of occurrence of the respective characteristics.

In the German language, prepositions, for instance, hardly ever occur as components of compound words.

In the stored order, prepositions rank rather low. By analyzing the above-mentioned compound word "Steckverbindung" and identifying the preposition "in" as the second component, the computer system is able to deduce from the lower rank that the preposition "in" is in all probability not a component of the compound word "Steckverbindung", so that decomposing the word "Steckverbindung" into the components "steck", "Verb", "in", and "Dung" would probably be false.

The stored rank order allows the computer system to decide whether a compound word to be analyzed has been correctly or incorrectly decomposed. If the computer system decides that a particular decomposition is incorrect, it is able to carry out further decompositions and decide accordingly, with the correct decomposition being found by comparing the various decompositions that have been made.

A method of the previously described kind successively compares a compound word to be analyzed according to a rank order of particular component characteristics, which is stored in the memory. In this manner, the rank order of the component characteristics is considered during the comparison of the word to be analyzed with the stored components. The comparison initially uses only those stored components whose characteristics rank highest in the rank order. In the German language, these would be nouns including an "s" as a connective element in the front of the compound. Thus, only those nouns are searched in the memory and used for comparison which occur with the connective element "s" in a compound. If this comparison yields no match between the compound word and the word to be analyzed, those components in the memory of the computer system are searched and used for comparison whose characteristics rank second in the stored order. This is continued until a match is found. Then, the remainder of the compound word to be analyzed is searched and compared with the components at the top of the rank order.

When processing the above-mentioned compound word "Dichterkongreß" from the back, the computer system will first identify the noun "Kongreß" as a component of the compound word "Dichterkongreß". As the remaining letters do not include an "s, a comparison with nouns including an "s" as a connective element and which by virtue of this are at the top of the stored rank order will yield no match. The computer system thus compares the remaining letters of the compound word to be analyzed only with those nouns which, holding rank two in the described order, do not have an additional connective element in compound words. Components of this kind include the noun "Dichter". This will prompt the computer system to find a match between that noun and the remaining letters of the compound word. As the component thus found ranks very high in the rank order, the computer system will conclude that the compound word "Dichterkongreß" to be analyzed most probably decomposes into the components "Dichter" and "Kongreß".

An embodiment of the invention provides for a rank order of the number of components of a compound word corresponding to the number of letters of which the compound word to be analyzed consists to be stored in the memory of the computer system, with the rank order depending upon the frequency of occurrence. This order may be used on its own, that means independently of the rank order associated with the component characteristics.

Thus, prior to decomposing a compound word to be analyzed into its components, the computer system is able to count the number of letters of the compound word, deducing from the stored rank order the number of components of which the compound most probably consists. The compound word "Steckverbindung", for example, has a total number of 15 letters. According to the stored rank order, a word having 15 letters most probably consists of two components. This information tells the computer system that the word "Steckverbindung" does not decompose into the components "steck", "Verb", "in", and "Dung".

By means of the invention, rank orders are made available to the computer system which enable the computer system to distinguish between incorrect and correct decompositions of compound words to be analyzed. The rank orders are dependent upon the respective natural language. The invention may be used to particular advantage for compound nouns of the German language and similar languages. It is obvious that the invention is not only suitable for text processing by means of a computer system but also for translating texts of a natural language with the aid of the computer as well as for recognizing text uttered by a human being with the aid of the computer.

Further embodiments and advantages of the invention will be described in detail below with reference to drawings, in which
- Fig. 1: shows a table associating the number of letters and the number of components of compound nouns, as well as the respective rank orders;
- Fig. 2: shows a diagram of the associated information according to Fig. 1;
- Fig. 3: shows a table explaining the codes for components of compound nouns;
- Fig. 4: shows the rank order of components for nouns, and
- Fig. 5: shows the rank order of the components in general.

The examples by means of which the invention is described below concern the German language. It is obvious that the invention may also be used for other natural languages. For the examples, the invention is also described with reference to compound nouns. It is likewise obvious that the invention may also be used for compound verbs, compound adjectives, i.e. compound words in general.

The German language has a large number of nouns consisting of two or more components. Such components may be nouns or verbs, adverbs, adjectives, prepositions, etc. The compound nouns "Abschlußprüferbericht" and "Geistesblitz", containing the nouns "Abschluß", "Prüfer", "Bericht", as well as "Geist", "Blitz", will be used as examples below .

In a computer system for analyzing compound nouns, all possible components of the compound nouns are stored in the memory of the computer system. Thus, the components "Abschluß", "Prüfer", "Bericht", "Geist", and "Blitz" are stored amongst others in the memory.

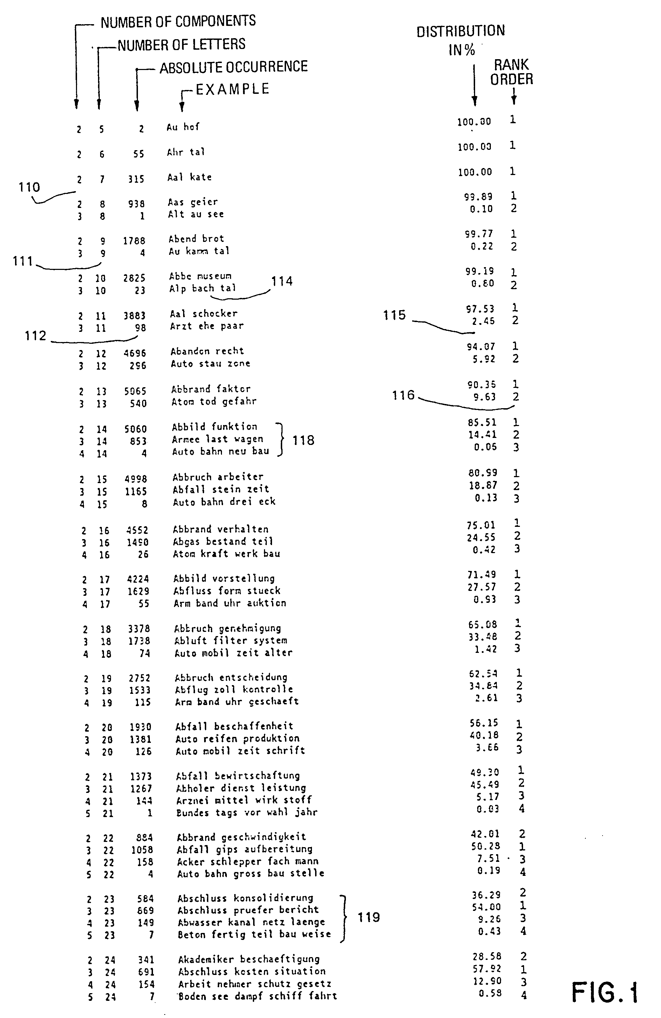

Fig. 1 shows a table in which the number of letters and the number of components of compound nouns are associated with each other, along with the respective rank orders. Column 110 of Fig. 1 lists the number of components of the associated compound noun, column 111 the number of letters of the associated noun, column 112 the absolute occurrence of such compound nouns, column 114 gives an example of an associated compound noun, column 115 shows the distribution in percent of the associated compound nouns with respect to the number of components in column 110, and column 116 a rank order of associated compound nouns for each of the number of letters listed in column 116.

Needless to say, the table of Fig. 1 is not complete. The table of Fig. 1 is based on a study for which all compound nouns starting with A and B were classified on the basis of a text corpus consisting of some 60 million words of running text. The total number of compound nouns examined was about 68 000 which occurred in the text corpus roughly three million times. It is assumed that the results obtained are representative ones, which means that they also apply to compound nouns with other initials. The aera of the table of Fig. 1 designated as 118 lists those compound nouns which, according to column 111, consist of 14 letters. Column 112 shows that 5 060 of the examined nouns consist of 14 letters and two components. 853 of the examined nouns consist of 14 letters and three components. Only four compound nouns consist of 14 letters and 4 components.

Column 114 lists the noun "Abbildfunktion", consisting of the components "Abbild" and "Funktion", as an example of compound nouns made up of 14 letters and two components.

Analogously, the compound noun "Armeelastwagen" is given as an example of a noun with 14 letters and three components and the noun "Autobahnneubau" as a noun with 14 letters and four components. The compound noun "Autobahnneubau" is made up of the nouns "Auto", "Bahn" and "Bau" as well as the adjective "neu".

Column 115 of the table of Fig. 1 shows the distribution in percent of the number of components in compound nouns with 14 letters. This distribution is based on the absolute occurrence according to column 112 as related to the total number of nouns with 14 letters, which is obtained by addition yielding 5 917. Thus, the 5 060 compound nouns with 14 letters and two components account for some 85 percent of the compound nouns with 14 letters. In accordance therewith, some 14 % of all compound nouns with 14 letters have three components. Only 0.06 % of all nouns with 14 letters has four components.

This distribution in percent according to column 115 yields a rank order as per column 116. At the top of the order ranked "1" are those 14-letter compound nouns of column 116 which consist of two components. Ranked "2" are compound nouns consisting of three components and "3" (at the bottom) compound nouns with four components.

Compound nouns with 23 letters are listed in the area designated as 119 of the table of Fig. 1. The study carried out has shown that compound nouns consisting of three components have the highest rank "1". These are followed, according to column 116, by compound nouns consisting of two components and those consisting of four and five components. The noun "Abschlußprüferbericht" in column 114 of the table of Fig. 1 is an example of a compound noun of the highest rank, i.e. a compound noun consisting of 23 letters and three components.

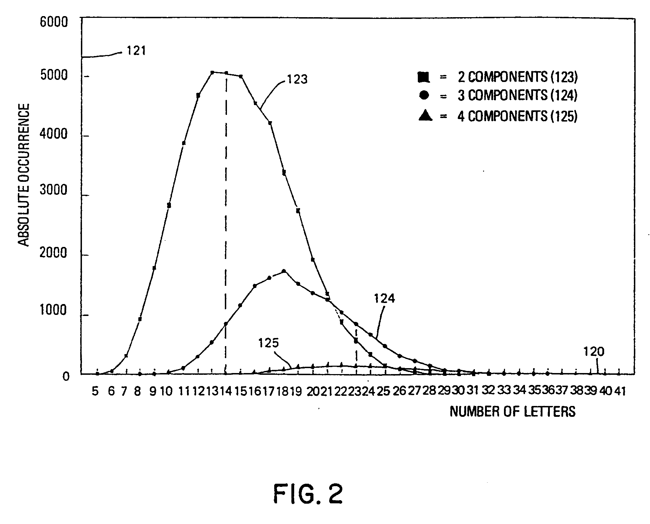

The associated information according to Fig. 1 is graphically represented in the diagram of Fig. 2. The abscissa or x-coordinate 120 of the coordinate system indicates the number of letters according to column 111 of Fig. 1 and coordinate 121 the absolute occurrence according to column 112 of Fig. 1. In the coordinate system there are three curves 123, 124 and 125, curve 123 representing all compound nouns with two components, curve 124 all nouns with three components and the relatively flat curve 125 all compound nouns with four components.

Fig. 2 shows quite clearly that compound nouns with 14 letters most frequently consist of two components. This corresponds to rank "1" according to column 116 of the table of Fig. 1. The diagram of Fig. 2 also shows that there is still some probability of a noun with 14 letters consisting of three components, according to rank "2" or the distribution of 15 % in columns 116 and 115 of the table of Fig. 1. The diagram of Fig. 2 finally shows that a compound noun with 14 letters is extremely unlikely to consist of four components. This corresponds to the lowest rank "3" of column 116 in the table of Fig. 1.

The memory of the computer systems stores data indicating at least how the number of components according to column 110, the number of letters according to column 111, and the rank order according to column 116 are interrelated. Thus, a rank order of the number of components of the compound noun is stored for each number of letters of a compound noun. For a compound noun with a particular number of letters, this rank order enables the computer system to read the most probable number of the compound noun's components from its memory.

In addition, the absolute occurrence according to column 112 of Fig. 1 may be stored in the memory of the computer system. This allows the computer system to determine the most probable number of components of a compound noun as well as the relevant probability value.

If the computer system has to analyze, for example, the compound noun "Abschlußprüferbericht", it first of all counts the number of letters of this noun. This is 23. From the rank order stored in its memory the computer system concludes that a compound noun with 23 letters most probably consists of three components. This information may be used by the computer system for its further analysis of the compound noun.

Accordingly, for analyzing the compound noun "Geistesblitz", the computer system counts the letters of this noun and concludes from the associated information in its memory that a compound noun with 12 letters most probably consists of two components. This information may then also be taken into account during the further analysis of the compound noun.

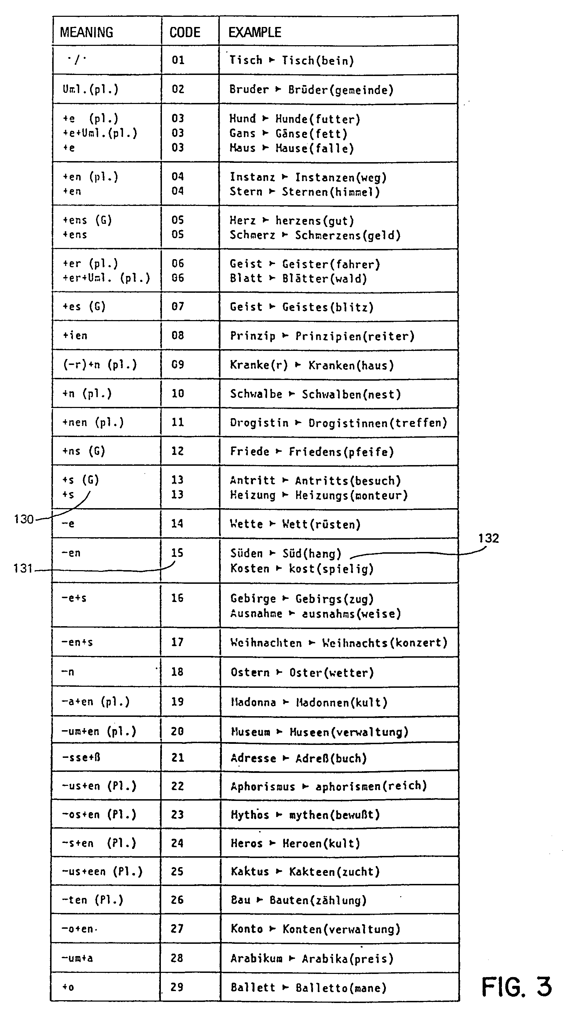

Fig. 3 shows a table explaining the codes for components of compound nouns. In column 131 the codes are consecutively numbered from "01" to "29". Column 130 gives the meaning of the codes and column 132 contains one or several examples of these codes.

Thus, code "01", for example, indicates that a component with this code within a compound word does not have to be changed. An example of this code "01" is given in column 132 and concerns the component "Tisch" which is contained unchanged in the compound noun "Tischbein". For code "02" listed in column 131, column 130 indicates that a component with this code appears in a compound noun with an umlaut and in plural form. An example of this is given in column 132 with the component "Bruder" which in the compound noun "Brüdergemeinde" appears in plural form and with an umlaut. Accordingly, code "07" indicates that the letters "+es" are affixed to a component with this code to form the genitive. The "+" symbol in column 130 denotes that the letters "es" are affixed. This may be seen from the component "Geist" in column 132 to which the letters "es" are added in the compound noun "Geistesblitz". It is also pointed out that a "-" symbol in column 130 denotes that the letters following it are omitted. From a component with the code "15", the letters "en", for example, are omitted, as with the component "Süden" in the compound noun "Südhang".

Thus, the table of Fig. 3 classifies the components of compound nouns with regard to particular characteristics, adding connective elements or omitting final letters when such components occur in a front position. The table of Fig. 3 is not complete, which means that there may be further characteristics of compound nouns which could be classified by further codes. The table of Fig. 3 is stored in this or in another suitable form in the memory of the computer system.

It has been found that particular characteristics of components are more frequent than others. The examined cases only dealt with the initials A and B in compound nouns. The previously mentioned compound nouns numbering roughly 68 000 were formed from about 5 000 individual components. This works out at a total occurrence of 2.2 million for the components. It is assumed therefore that the results obtained are representative ones and that they also apply to compound nouns with other initials.

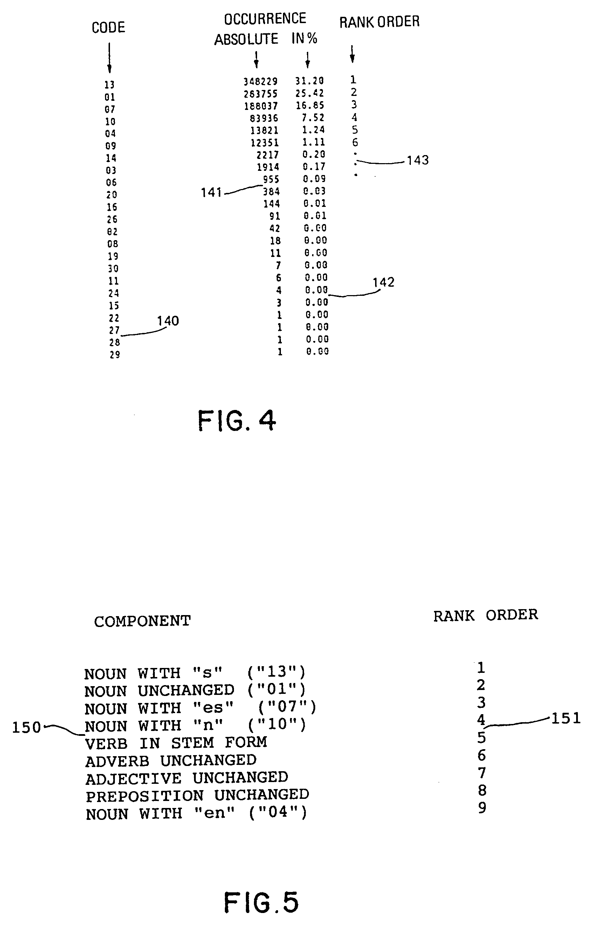

Fig. 4 shows the rank order of the components for nouns. Column 140 lists the codes of the components, which correspond to those in column 131 of Fig. 3. Column 141 specifies the absolute occurrence and column 142 the ocurrence in percent of components of the respective associated codes with regard to the total number of components examined. Finally, column 143 gives a rank order corresponding to the frequency of occurrence of the components with the respective associated code. Again, the rank order of Fig. 4 is not complete.

Fig. 4 shows that the highest rank "1" is assigned to components with the code "13", i.e. those to which an "s" is affixed in compound nouns according to the table of Fig. 3. The reason for this is that more than 30 % of the components of compound nouns examined had an affixed "s". Some 25 % of the components examined remained unchanged within compound nouns; such components are ranked "2", followed by components with the codes "07" and "10" ranked "3" and "4", respectively.

As previously mentioned, the table of Fig. 3 and the rank order of Fig. 4 apply only to nouns. This means that the order of Fig. 4 applies only to compound words made up of nouns. Frequently, however, the components of compound words are not only nouns but also verbs, adverbs, adjectives, etc.

It is possible to define a rank order for such verbs, adverbs, adjectives, etc. It has been found however that verbs in their stem form occur more frequently in compound nouns than, for instance, verbs from whose infinitive form the letter "n" has been deleted. It has also been found that unchanged adverbs and unchanged adjectives are much more frequent in compound nouns than changed adverbs or changed adjectives. The cases examined again concerned only nouns with the initials A and B. It is assumed however that the results obtained are also applicable to compound nouns with other initials. Any results obtained in connection with nouns, verbs, adverbs, adjectives, etc. were then compiled and listed in a common rank order. This rank order of all components is shown in Fig. 5.

Fig. 5 indicates the components of compound nouns in column 150 and their associated rank in column 151.

According to Fig. 5, the highest rank "1" is assigned to nouns occurring as components with the connective element "s". These nouns have the code "13". Nouns remaining unchanged, i.e., nouns with the code "01" are ranked "2", followed by nouns with the connective elements "es" and "n" ranked "3" and "4", respectively. Verbs in stem form are ranked "5" and unchanged adverbs "6". These are followed by unchanged adjectives and unchanged prepositions ranked "7" and "8". Finally, nouns with the connective element "en", i.e. code "04", are ranked "9".

Again, the rank order of Fig. 5 is not complete, which means that there may be additional ranks for components with other characteristics. In addition, there may be slight changes in ranks after components with other initials have been considered. It is assumed however that the first four ranks in the rank order of Fig. 5 will remain unchanged regardless of whether components with other initials are considered.

For analyzing the compound noun "Abschlußprüferbericht", the computer system will examine this noun letter for letter back to front, irrespective of the manner in which it is input. The computer system will thus start with the last three letters of the noun, looking for a matching component in its memory. In the present case, the memory of the computer system contains no component with the letters "cht". This prompts the computer system to search its memory for a component matching the last four, five, etc. letters of the compound noun to be analzyed. In the present case, the first matching component found will be "Bericht". This component "Bericht" is stored by the computer system in some manner as the first component found for the compound noun "Abschlußprüferbericht".

Then the computer system continues its search for further components letter for letter back to front. Comparisons with stored components by the computer system will yield "er" as the next component in the present case. This component is a third person singular pronoun. From the order of Fig. 5, which does not even contain pronouns, the computer concludes that the occurrence of pronouns in compound nouns is highly improbable.

During its further analysis of the compound noun "Abschlußprüferbericht" the computer system will come across the component "prüf". This component is an unchanged stem of the verb "prüfen". In the rank order of Fig. 5, verbs in stem form are ranked "5". From this the computer system concludes that the occurrence of the component "prüf" as an unchanged stem of the verb "prüfen" is rather improbable in a compound noun.

Then the computer system will continue its analysis of the compound noun "Abschlußprüferbericht", coming across the further components "Schluß" and "ab". During its analysis, the computer system decomposes the compound noun "Abschlußprüferbericht" into five components. As previously mentioned however, compound nouns with 23 letters, i.e., for example, the noun "Abschlußprüferbericht", are extremely unlikely to consist of five components.

From the low probability of occurrence of the pronoun "er" in a compound noun, the rather slight probability of the component "prüf" occurring as an unchanged stem of the verb "prüfen" in a compound noun and from the extremely low probability of a 23-letter compound noun consisting of five components, the computer system concludes that the decomposition of the compound noun "Abschußprüferbericht" into the components "ab", "Schluß", "prüf", "er", and "Bericht" must be incorrect.

This will prompt the computer system to carry out a further analysis for which the component "er" as a possible component of the compound noun "Abschlußprüferbericht" will be dismissed as incorrect right from the start. After the component "Bericht", the computer system will then find in its memory the component "Prüfer", ranked "2" in the order of Fig. 5, as the next matching component. Thus, the probability of this analysis having been correct is rather high.

During the further analysis of the remaining letters, the computer system will come up with the matching components "Schluß" and "ab". The component "Schluß" is an unchanged noun ranked "2" with a high degree of probability. Component "ab" on the other hand is a preposition which according to the order of Fig. 5 is rather improbable to occur in a compound noun. During this second analysis, the computer system decomposes the compound noun "Abschlußprüferbericht" into four components for which, since they do not have the highest rank according to Fig. 1, a certain probability of occurrence, however slight, cannot be ruled out, as previously explained.

From the slight probability of occurrence of the component "ab" and the rather slight probability of the 23-letter noun "Abschlußprüferbericht" consisting of four components, the computer system concludes that this second analysis has not been correct either.

The computer system will then carry out a further analysis of the compound noun "Abschlußpüferbericht", for which, compared with the preceding analysis, it will suppress the component "Schluß" as incorrect. As a result, this third analysis by the computer system will yield the component "Abschluß" as the last matching component in the memory. This component "Abschluß" is an unchanged noun which, being ranked "2" in the order of Fig. 5, is highly probable to occur. In this third analysis, the compound noun "Abschlußprüferbericht" is decomposed by the computer system into three components, namely the components "Abschluß", "Prüfer" and "Bericht". As previously explained, compound nouns with 23 letters are most probably nouns consisting of three components.

As there is a high probability of occurrence for the component "Abschluß" and the noun "Abschlußprüferbericht" has 23 letters and thus is highly probable to consist of three components, the computer system may conclude from this information that the last, third, analysis has been correct. The computer system has thus found the correct decomposition for the compound noun "Abschlußprüferbericht" into the components "Abschluß", "Prüfer" and "Bericht".

The previously described method for analyzing compound nouns verifies compound nouns decomposed by the computer system into components with the aid of rank orders stored in the memory of the computer system in order to determine whether such nouns have been correctly or incorrectly decomposed. However, it is also possible to consider the stored rank orders at the stage of decomposing a compound noun into components. This will be described in detail below.

If the computer system is given the compound noun "Geistesblitz" for analysis, it will compare this noun letter for letter back to front with components stored in its memory. In the present case, the computer system will find the component "Blitz" as the first component of the compound noun "Geistesblitz".

The stored rank orders may not be used for the compare and search operations required for this purpose, because the characteristics of the components of Fig. 5 invariably refer to components in the initial position and to positions other than the final one. Thus, for instance, rank "4" according to Fig. 5 designates a noun to which the letter "n" is added in a compound noun. According to Fig. 3, code "10" denotes, for example, that the component "Schwalbe" is suffixed by an "n" in the compound noun "Schwalbennest". Such changes, i.e. the addition or deletion of letters, never occur in the last component of a compound noun but always and exclusively in the preceding components. Therefore, the rank order of Fig. 5 cannot be used to identify the last component of the compound noun "Geistesblitz" but only the preceding one.

For considering the rank order of Fig. 5 in this way, the computer system, when searching for the last but one component of the compound noun "Geistesblitz", will compare only those components which correspond to the respective rank of the order of Fig. 5. Thus, for comparing the remaining letters of the compound word to be analyzed, the computer system will initially consider only all nouns with a connective element "s". Any other components will not be considered in this first compare step. If no matching component is found by the computer system in this first step, a second compare step for the compound noun to be analyzed will consider only those nouns that occur unchanged in a compound noun. If no matching component is found, a further compare step will again involve only nouns with the connective element "es". According to the rank order of Fig. 5, this continues until a match between the remaining letters of the compound noun to be analyzed and components stored in the memory of the computer system has been found.

If the computer system discovers in the above-described first step that the last of the remaining letters of the compound word to be analyzed is not an "s", it will end this step at once. Thus, without comparing nouns with a connective element "s", the next step will be carried out in which the compound word to be analyzed is compared with unchanged nouns corresponding to rank "2" of the order of Fig. 5. For other ranks, such as rank "3" or "4" of the order of Fig. 5 compare steps may also be terminated at once.

In the case of the compound noun "Geistesblitz", the first component is the component "Geist" to which the letters "es" are added according to code "07". Such nouns are ranked "3" in the order of Fig. 5.

In a first step, the computer system compares all nouns with a connective element "s" with the remaining letters of the compound noun "Geistesblitz". In this step no match will be found by the computer system, since, as previously mentioned, the last but one component of this noun is the component "Geist" to which the connective element "es" rather than "s" is added in compound nouns. As previously explained, this compare operation will only consider components with "s" as a connective element.

In the next step, the computer system will compare all stored nouns occurring unchanged in a compound noun with the remaining letters of the compound noun "Geistesblitz". This compare step of the computer system will yield no match either, since, as previously mentioned, the memory contains the component "Geist" rather than the letters "Geistes". This step, too, will leave components other than those corresponding to rank "2" unconsidered.

In a third step, all compound nouns including the connective element "es" will be compared with the remaining letters of the compound noun "Geistesblitz". As previously mentioned, the component "Geist" is stored in the memory of the computer system. In compound nouns, this component occurs with the connective element "es" according to code "07" of Fig. 3. Thus, in this third step, the computer system will find that the component "Geist" stored in its memory and the associated connective element "es" match the remaining letters of the compound noun "Geistesblitz" to be analyzed.

Accordingly, the computer system decomposes the compound noun "Geistesblitz" into two components. As previously mentioned, nouns with 12 letters most probably consist of two components. As the compound noun "Geistesblitz" has 12 letters, its decomposition into two components by the computer system is thus confirmed. The computer system has correctly decomposed the compound noun "Geistesblitz" into its components "Geist" and "Blitz", taking account of the fact that the component "Geist" is accompanied by the connective element "es" in compound nouns.

The last approach described for analyzing compound nouns decomposes a noun into those components which, according to Fig. 5, have the highest probability of occurring in compound nouns. This approach also increases the processing speed, as it limits the search for matching components. Instead of matching all the components stored in the memory of the computer system only those corresponding to the respective rank are matched. This requires far fewer compare operations than a search involving the totality of the stored components.

## Claims

1. Computer system for the automated analysis of words composed of several components, comprising a memory storing the components of the compound words,
characterized in that
the memory stores a rank order of particular characteristics of the components, said rank order depending upon the frequency of occurrence of the respective characteristics (Fig. 5).

2. Computer system as claimed in claim 1,
characterized in that
the memory stores a rank order of the number of components of a compound word depending upon the number of letters of the compound word to be analyzed, said rank order depending upon the frequency of occurrence (Fig. 1).

3. Computer system as claimed in claim 1 or 2,
characterized in that
it is used for text processing, text translation or speech recognition.

4. Method for the automated analysis of words composed of several components with the aid of a computer system, wherein the components of the compound words are stored in a memory of the computer system,
characterized in that
a compound word to be analyzed is successively compared with the stored components according to a rank order of particular component characteristics stored in the memory.

5. Method as claimed in claim 4,
characterized in that
in the German language the compound word is intially compared with all stored components that are nouns with the connective element "s".

6. Method as claimed in claim 5,
characterized in that
the compound word is then compared with all stored components that are nouns occurring unchanged.

7. Method as claimed in claim 6,
characterized in that the compound word is then compared with all stored components that are nouns with the connective element "es".

8. Method as claimed in claim 7,
characterized in that
the compound word is then compared with all stored components that are nouns with the connective element "n".

9. Method as claimed in claim 8,
characterized in that
the compound word is then compared with all stored components that are verbs in stem form.

10. Method as claimed in claim 9,
characterized in that
the compound word is then compared with all stored components that are unchanged adverbs.

11. Method as claimed in claim 10,
characterized in that
the compound word is then compared with all stored components that are unchanged adjectives.

12. Method as claimed in claim 11,
characterized in that
the compound word is then compared with all stored components that are unchanged prepositions.

13. Method as claimed in claim 12,
characterized in that
the compound word is then compared with all stored components that are nouns with the connective element "en".

14. Method for the automated analysis of words, composed of several components, with the aid of a computer system,
characterized in that
the letters of a compound word to be analyzed are counted, and that the counted number of letters is associated with a stored number of components of the compound word.

15. Method as claimed in claim 14,
characterized in that
according to a rank order depending upon the frequency of occurrence, the counted number of letters is successively associated with different numbers of components.
